**Europäisches Patentamt**

(19) **European Patent Office**

**Office européen des brevets**

(11) Publication number: **0 184 443**
**B1**

# (12) EUROPEAN PATENT SPECIFICATION

(45) Date of publication of patent specification: **11.04.90**

(21) Application number: **85308837.5**

(22) Date of filing: **04.12.85**

(51) Int. Cl.⁵: **F 25 B 9/00, B 64 D 13/08, F 01 D 25/02**

(54) Environmental control system.

(30) Priority: **06.12.84 US 678629**

(43) Date of publication of application:
**11.06.86 Bulletin 86/24**

(45) Publication of the grant of the patent:
**11.04.90 Bulletin 90/15**

(84) Designated Contracting States:
**DE FR GB IT**

(56) References cited:
**EP-A-0 035 909**
**DE-B-1 102 186**
**FR-A-2 125 381**
**FR-A-2 352 256**
**GB-A- 753 194**
**GB-A- 767 176**
**GB-A-1 197 305**
**US-A-2 929 224**
**US-A-4 127 011**
**US-A-4 374 469**

(73) Proprietor: **ALLIED-SIGNAL INC. (a Delaware corporation)**
**Columbia Road and Park Avenue P.O. Box 2245R Morristown New Jersey 07960 (US)**

(72) Inventor: **Nims, Robert A.**
**910 West Del Amo Boulevard, No. 1, Torrance California 90502 (US)**

(74) Representative: **Rees, David Christopher et al**
**Kilburn & Strode 30 John Street**
**London WC1N 2DD (GB)**

Courier Press, Leamington Spa, England.

## Description

This invention generally relates to gas conditioning apparatus and method and relates more particularly to improved techniques for inhibiting ice formation in such systems.

Fluid conditioning systems are utilized, by way of example, in aircraft to provide a conditioned airflow to the passenger or pilot cabins or to other locations in the aircraft requiring a controlled atmosphere. Typically such systems draw a pressurized source of air, either from the aircraft engine or other compressing source on board the aircraft for conditioning as to temperature and as to moisture content. Other functions accomplished by such a fluid conditioning system may include removal of contaminents or other undesirable elements in the airflow. In a closed systems such as in an aircraft, tank or other occupied vehicle, system efficiency, weight, and simplicity become paramount designed considerations. Examples of such fluid conditioning systems may be found in U.S. Patent Nos. 4,198,830 of Campbell, U.S. Patent 3,452,273 of Kinsell et al, and co-pending European Patent Publications 0 147 987 and 0 150 599.

For system efficiency and economy of weight it is typical in such fluid conditioning systems to utilize a turbine expander for removal of heat from the airflow. Maximal efficiency is obtained by a large reduction in temperature of at least a portion of the airflow and subsequent mixing of the cold airflow with a warm airflow source. Higher system efficiencies in heat removal furthermore dictate higher pressure systems. High pressure systems such as described in the above European patent applications typically include water condensation and moisture removal elements. However, even with utilization of such techniques the system is subject to ice formation under certain conditions of critical operation. For example relatively cold temperatures, perhaps as much as −24 degrees to −34 degrees C. may be experienced in the airflow during its expansion at the turbine expander.

Previous anti-icing techniques for inhibiting a formation of ice within the system involve inherent parasitic power losses, so reducing the overall system efficiency. Previous attempts to deal with this problem have been faced with the choice of either accepting a substantial parasitic power loss to maintain system simplicity, or introducing relatively complex, expensive and/or weight increasing elements and subsystems for controlling the anti-icing arrangement to minimize power consumption thereof.

It is the primary object of the present invention to provide systems for fluid conditioning with improved anti-icing techniques with minimum performance penalties on the system from the standpoint of parasitic power loss, weight, system complexity and cost.

More particularly, it is an object of the present invention to provide an anti-icing flow of warm air already available in the fluid conditioning system for use in preventing ice formation therein, which utilizes energy normally lost from the system as the power source for driving the anti-icing airflow.

Another important object of the present invention is to provide an anti-icing apparatus and method as set forth in the preceding paragraphs, wherein the anti-icing airflow is controlled in volume in relation to the operating parameters of the system to provide the anti-icing airflow only when required in order to minimize the parasitic power loss from the system.

More particularly the preceding objects and advantages are accomplished by utilizing an existing pressure differential in the conditioned airflow within the fluid conditioning system as the power source for the anti-icing airflow, the magnitude of the pressure differential being related to critical operating parameters of the system and more particularly related to the critical operational points in the fluid conditioning system most conducive to ice formation therein.

According to one aspect of the present invention a system for conditioning a working gas in a flow path, comprising a control valve for varying the flow of gas in the flow path, a turbine expander for expanding and cooling the gas and located in the flow path downstream of the control valve, and a bleed line for directing a flow of anti-icing gas from a part of the flow path upstream of the control valve back to the flow path downstream of the control valve characterised in that the bleed line leads to an anti-icing chamber which is in heat-exchange relationship with, but separated from, a location of the path for working gas in the turbine expander which is liable to icing, and then back to the flowpath downstream of the control valve at a point upstream of the turbine expander.

Preferably the flow of anti-icing gas is induced solely by the pressure differential existing across the control valve and in a convenient arrangement the volume of the flow of anti-icing gas to said region is controlled by the magnitude of the pressure differential across the control valve.

The expansion and cooling of the gas in the turbine expander may tend to cause icing. For this purpose, where the turbine expander comprises a radial inflow turbine wheel provided with turbine blades, a shroud may encase the turbine blades, and said region comprises a plenum arranged in heat exchange relationship with the shroud.

In U.S. Patent Specification No. 2924224, there is a control valve for varying the flow of gas in the flow path, and there is also a passage for directing anti-icing gas from a part of the flow path upstream of that control valve to be introduced into the outlet from the turbine expander. This ensures that the total airflow in the duct leading to the cabin is maintained above freezing. A thermostat in the duct controls a valve in the passage for the anti-icing gas. The arrangement does not permit the airflow to be below freezing.

In U.S. Patent Specification No. 4127011, the working gas is caused to flow over a wall of the turbine expander on its way to the turbine expander so that ice will not form on the turbine expander surfaces. In that arrangement, there is no separate flow of anti-icing gas from the flow path upstream of the control valve, and, indeed, there is no control valve. It is the main working gas that is used to prevent icing.

The invention may be carried into practice in various ways but three specific embodiments will now be described, by way of example, with reference to the accompanying drawings, in which:

Figure 1 is a schematic representation of one form of fluid conditioning system constructed in accordance with the principles of the present invention;

Figure 2 is a partial longitudinal cross-section of the turbine expander of Figure 1;

Figure 3 is a simplified schematic view of an alternate form of the present invention; and

Figure 4 is another simplified schematic view of yet a further form of the present invention.

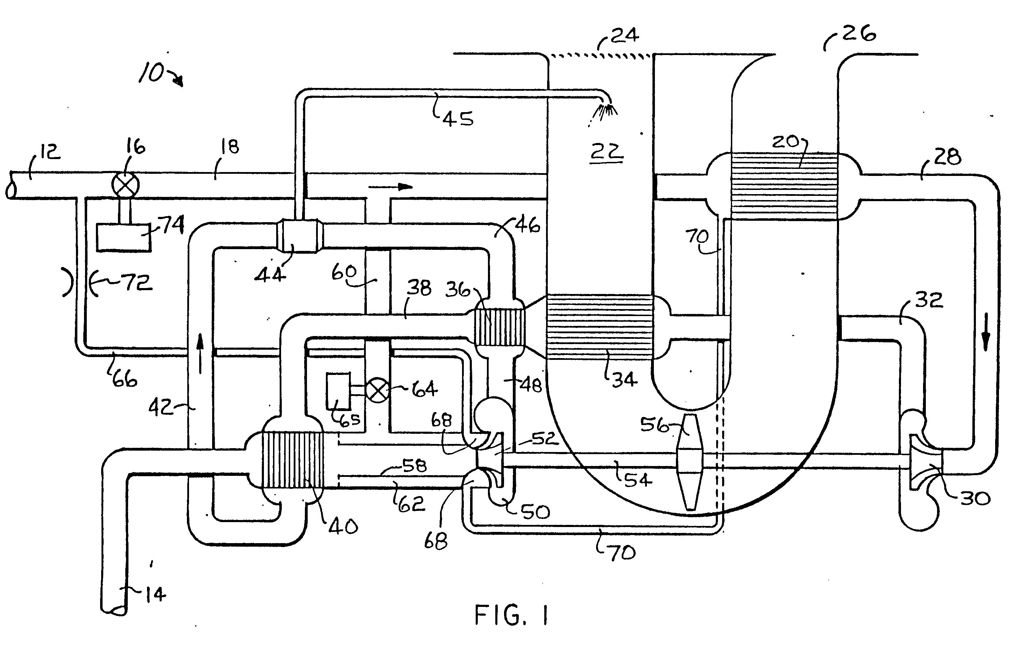

Figure 1 illustrates a system 10 for conditioning a working fluid, the system shown being an environmental control system as may be utilized in aircraft. The system 10 includes a fluid flow path leading from an inlet duct 12 ultimately to an outlet duct 14 from which the conditioned airflow is directed to a point of use within the aircraft. Control valve means in the form of a flow control or pressure control valve and shutoff device 16 is interposed in the inlet duct 12 for adjusting the rate of flow of working fluid delivered through a first duct 18 toward the heat pass side of a primary or first heat exchanger 20. The heat exchanger 20 acts as a heat sink having a cool path side carrying a flow of cooling air. This cooling air may be ambient air delivered through a cooling passage 22 from an inlet 24 to an outlet 26.

After extraction of a certain amount of heat from the working fluid, it is directed out of the heat exchanger 20 through a second duct 28 to the inlet of a rotary compressor 30. From the rotary compressor 30, the compressed working fluid is delivered through a third duct 32 into the heat pass side of a secondary heat exchanger 34 which is also disposed in the cooling duct 22 in heat exchange relationship with the cooling air therethrough. From the secondary heat exchanger 34 the working fluid is passed through a reheater heat exchanger 36 and a fourth duct 38 to the inlet of a condenser heat exchanger 40. From the exhaust of the heat exchanger 40, the working fluid is directed through a duct 42 toward a water extractor or trap 44. Condensed moisture is removed from the working fluid in the water trap 44, and the excess water may be conveniently expelled through a duct 45 into the cooling passage 22. Exhaust of working fluid from the water trap 44 is directed through a duct 46 into the cooling side of the reheater heat exchanger 36 for slight reheating of the demoisturized working fluid. From the reheater 36 the working fluid then passes through a duct 48 to a toroidally shaped inlet duct 50 of a turbine expander 52.

The turbine expander 52 is connected via a drive shaft 54 to drive the rotary compressor 30. Conveniently, a central fan 56 is also mounted upon the shaft 54 within the cooling duct 22 to develop the cooling airflow through the duct 22 for use in extracting heat from the working fluid in both the primary and secondary heat exchangers 20 and 34.

Patent Publication No. EP-A-0 147 987 is related to such an arrangement.

While passing through the turbine expander 52 the working fluid is rapidly expanded and therefore cooled and thereafter exhausted through a duct 58 towards the cool side of the condenser heat exchanger 50. Exhausting from heat exchanger 40, the working fluid then passes through the outlet duct 14 to a point of desired use.

For temperature control, a bypass passage 60, for relatively warm airflow, extends from the first duct 18 at a point downstream of the control valve 16 to an annular passage 62 surrounding the duct 58, and communicating with the latter immediately upstream of the entrance to the condenser heat exchanger 40. In this way relatively warm air from the first duct 18 is intermixed with the working fluid. In a conventional manner the relatively warm airflow through the bypass 60 is controlled via a temperature control valve 64 having an automatic control 65 associated therewith.

Additionally, a system 10 incorporates a bypass fluid flow path including a duct 66 extending from the inlet duct 12, at a location upstream of control valve 16, to an anti-icing plenum or chamber 68 disposed adjacent the turbine expander 52. This bypass flow path extends onward from the anti-icing plenum 68 through a second duct 70 which communicates with the fluid flow path at a location downstream of the control valve 16. In the embodiment illustrated in Figure 1 the second duct 70 communicates with the first duct 18 at a location just upstream of the primary heat exchanger 20. Disposed in the bypass passage 66 is a fixed flow restrictor 72 schematically illustrated in Figure 1. The relative size of the bypass passage 66 and/or the fixed flow restrictor 72 is such that the nominal flow to the bypass 66 is of the order of 10% or less of the major working fluid flow passing across the control valve 16 through the primary fluid flow path of the system. It will be noted that the conventionally controlled valve 16 also has a control apparatus 74 associated therewith for actuating the control valve 16 variably to restrict fluid flow therethrough and, ultimately, completely to shutoff fluid flow through the flow path.

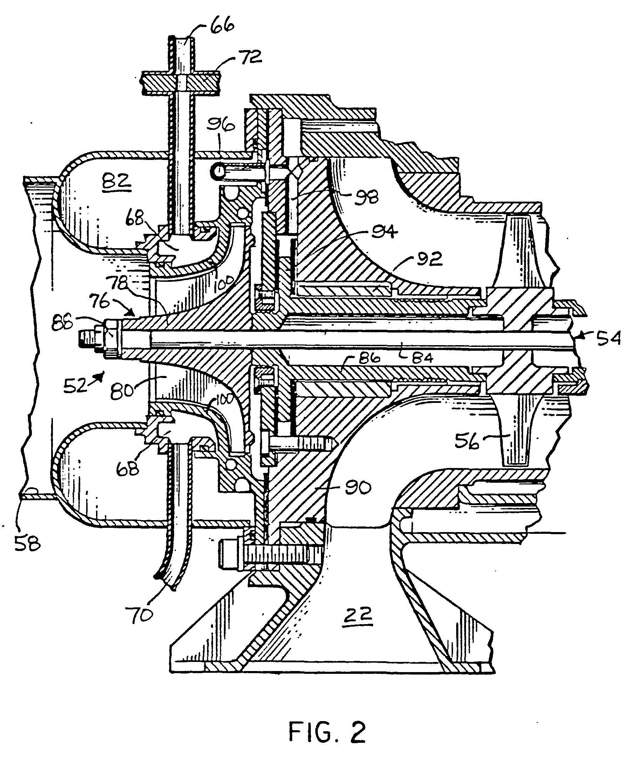

One embodiment of the rotary turbine expander 52 is illustrated in detail in Figure 2. More particularly, the rotary turbine expander 52 includes a radial inflow turbine wheel generally designated by the numeral 76, having a central hub portion 78 and a plurality of blades 80 extending radially therefrom. The radial inflow turbine wheel 76 is driven by the working fluid received from its inlet 82 to rotate the shaft 54. In the embodiment illustrated the shaft 54 includes an internal shaft portion 84 and an external shaft portion 86. Secured by a nut 88, the radial turbine wheel 76 is frictionally held to drive the outer shaft portion 86 of the turbine wheel upon which is also mounted the central fan 56. Not illustrated in Figure 2 is the compressor wheel 30 secured to the opposite ends of the shaft portions 84,86 by a nut to complete the frictional interlocking of the turbine, compressor and fan 56 on the shaft.

As illustrated in Figure 2, the associated housing structure 90 defines the cooling path 22 through which the cooling ambient airflow is induced by the central fan 56. The housing structure 90 associated with the turbine expander 52 carries compliant, multi-leafed, foil journal air bearings 92 and a thrust foil bearing 94 which rotatably support the shaft 54 and the rotating turbine expander 52. Being air bearings, the foil bearings 92 and 94 receive a supply of pressurized fluid from a pickup 96 in the compressor inlet 82 via an internal duct 98 for delivery to the thrust bearing 94 and journal bearings 92.

The first bypass duct 66 extends inwardly to the anti-icing plenum 68 which is annular in configuration and substantially surrounds the blades 80 of the turbine wheel 76. An annular shroud wall 100 is disposed closely adjacent the blades 80 of the turbine wheel 76 and in heat exchanger relationship with the anti-icing plenum 68 which surrounds it. The anti-icing flow delivered from the bypass passage 66 across the fixed flow restrictor 72 to the anti-icing chamber 68 acts to warm the annular shroud wall 100 to prevent formation of ice adjacent the blades 80 of the turbine expander 52.

In operation of the system illustrated in Figures 1 and 2, relatively warm working fluid is delivered from the inlet passage 12 to be throttled across the control valve 16 for subsequent passage through the fluid flow path and ultimate delivery to the outlet 14 to a point of use. The pressure differential developed across the control valve 16 due to the throttling of working fluid therethrough induces a fluid flow through the bypass passage 66, across the restrictor 72 into the anti-icing plenum chamber 68. The anti-icing fluid flow to the plenum 68 exhausts through the passage 70 back to the inlet duct 18 at a location downstream of control valve 16 just upstream of the primary heat exchanger 20. In this manner the present invention utilizes a parasitic power loss, in the form of a pressure differential developed across the control valve 16, to drive anti-icing flow of working fluid to the plenum 68.

The plenum 68 acts to maintain the shroud wall 100 at a relatively warm temperature such that ice may not form at this location in the fluid flow path. It has been found in high performance fluid conditioning systems of the type described, that the actual temperature adjacent the turbine expander, and particularly at the blades, may reach temperatures of -24 degrees to -34 degrees C. In the absence of anti-icing techniques, such low temperatures may create formation of ice at the shroud wall 100. This can be highly deleterious to the operation of the system due to the very high rotational speed of the rotary turbine expander 52 (100,000 rpm or higher). In particular, such ice, and contact therewith by the turbine blades, imposes serious side loads which can destroy the bearings 92 and 94 causing complete malfunction of the rotating machinery.

Due to the configuration and arrangement of the anti-icing bypass passages 66 and 70, the magnitude of the pressure differential developed across the control valve 16 determines the magnitude of the bypass airflow directed through the anti-icing chamber 68. It has been found that the primary conditions which are most conducive to ice formation correspond to the operation of the fluid conditioning system when the valve 16 is substantially throttling fluid flow therethrough and developing a substantial pressure differential thereacross. Accordingly, the present invention utilizes the pressure differential existing across the control shutoff valve 16 to control the magnitude of the anti-icing airflow. In this manner the present invention provides an anti-icing flow which is controlled automatically in volume in relation to the critical operating parameters of the overall system in order to minimize parasitic power loss generated by the anti-icing airflow, yet without introduction of additional complexity in the control and operation of the system.

More particularly, in the design of the overall fluid conditioning system 10, the heat exchangers must be sized to produce maximum performance of the system which occurs when maximum flow is being permitted across the control valve 16 to the first duct 18. This occurs, of course, when shutoff valve 16 is minimally restricting fluid flow therethrough. As a result, during throttling condition of the control valve 16, which reduces the volume of fluid flow through the conditioning system, the various heat exchangers essentially become oversized, relative to the rate of warm airflow therethrough, such that extremely cold conditions can develop at different locations in the fluid flow path. Thus, the present invention, which develops substantial anti-icing flow only in a condition where substantial throttling is being developed by the control valve 16, automatically minimizes the anti-icing airflow to that required by the system, and only when required by the system.

While in the embodiment of Figures 1 and 2 the location at which the anti-icing airflow is placed in heat exchange relationship with the primary fluid flow path is adjacent the turbine expander, it will be recognised that the present invention may be utilized to provide anti-icing at other locations in the fluid flow path where icing may occur. For example, the present invention may be utilized to direct an anti-icing flow to the inlet of the condenser heat exchanger 40 where icing conditions might occur.

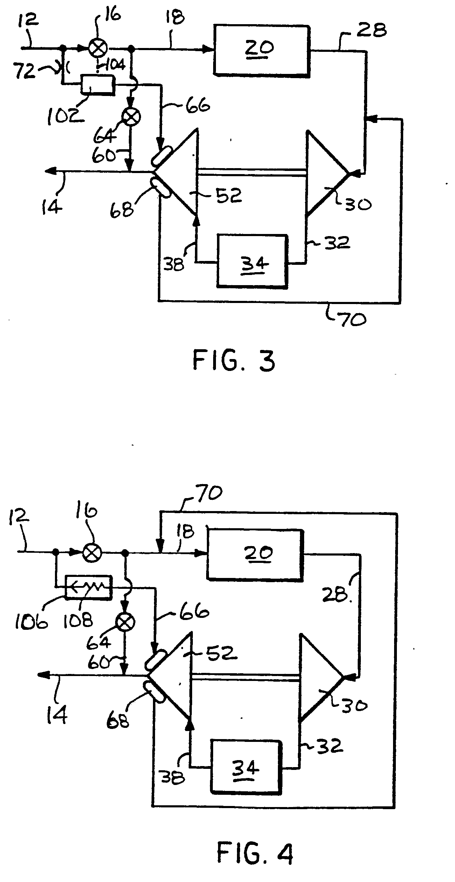

Figure 3 illustrates another form of the invention, and in this illustration several of the com-

ponents are eliminated for purposes of simplification. Illustrated in Figure 3 is the inlet duct 12, control valve 16, first duct 18, primary heat exchanger 20, second duct 28, compressor 30, third duct 32, secondary heat exchanger 34, fourth duct 38, turbine expander 52, and outlet duct 14. Also, in Figure 3 is illustrated the temperature control bypass duct 60 and its associated valve 64. In the arrangement of Figure 3 the first bypass duct 66 along with the fixed flow restrictor 72 are illustrated for delivering the anti-icing airflow to the anti-icing chamber 68, along with the return or second duct means 70 for carrying the anti-icing airflow exhausted from chamber 68.

In contrast to the Figure 1 arrangement, the embodiment illustrated in Figure 3 shows that the second duct 70 may communicate with the primary fluid flow path at a location downstream of the primary heat exchanger 20, in the second duct 28. This arrangement provides greater pressure differential for driving the anti-icing airflow through the anti-icing chamber 68. Additionally, as illustrated in Figure 3, the present invention may incorporate a flow control shutoff valve 102 in the bypass passage 66. The valve 102 may be operationally related to the control valve 16, as illustrated by the dashed line 104, such that, when the control valve 16 is moved to a fully closed position, to shutoff any flow to the fluid conditioning system, the shutoff valve 102 may also be moved to a fully closed position, also to close the anti-icing flow, so that no parasitic flow, and therefore power losses, occur in the fluid conditioning system in the shutoff condition.

Figure 4 illustrates a further embodiment of the system and shows a simplified schematic, somewhat similar to Figure 3. Again, similar reference numerals identify like elements in the Figure 1 embodiment.

In place of the fixed flow restrictor 72 as shown in embodiments of the Figures 1 and 3, the embodiment illustrated in Figure 4 includes a relatively low pressure relief valve, schematically illustrated at 106. This relief valve 106 acts normally to close fluid flow through the bypass passage 66 to the anti-icing chamber 68, in the absence of a pressure differential across the shutoff valve 16 below a predetermined magnitude. When the pressure differential across the shutoff valve 16 increases to a level above a predetermined magnitude (normally predetermined by the pretension of a spring 108), the relief valve 106 opens fully to permit anti-icing airflow therethrough. The arrangement of Figure 4 therefore provides automatic shutoff flow control through the anti-icing passage as provided by the shutoff valve 102 in Figure 3, and further provides that anti-icing flow occurs only when the control valve 16 is throttling to a substantial, predetermined magnitude.

From the foregoing it will be apparent that the present invention provides an improved system for conditioning fluid in a fluid flow passage which includes the steps of directing the working fluid through a restriction in the form of the control valve 16 which controls the flow and develops a pressure differential thereacross. Subsequently the working fluid is cooled downstream of the control valve 16 via a heat exchanger 20, and is then further cooled by expansion at a rotary turbine expander 52. The cooling accomplished by the heat exchanger and the turbine expander are capable of inducing ice formation at a location in the fluid path such as at the turbine expander 52. To inhibit formation of ice, the system according to one or more aspects of the present invention further includes the step of directing a parallel anti-icing flow of working fluid from the flow path at a location upstream of the control valve 16 into heat exchange relationship with the shroud wall 100 at the location where icing may occur. The present invention contemplates utilizing the pressure differential across the control valve 16 to induce and control the parallel anti-icing flow, by assuring return of the anti-icing flow to the fluid flow path at a location downstream of the control valve 16 but upstream of the turbine expander.

**Claims**

1. A system for conditioning a working gas in a flow path, comprising a control valve (16) for varying the flow of gas in the flow path, a turbine expander (50) for expanding and cooling the gas and located in the flow path downstream of the control valve (16), and a bleed line (66, 70) for directing a flow of anti-icing gas from a part of the flow path upstream of the control valve (16) back to the flow path downstream of the control valve (16) characterised in that the bleed line leads to an anti-icing chamber (68) which is in heat-exchange relationship with, but separated from, a location of the path for working gas in the turbine expander which is liable to icing, and then back to the flow path downstream of the control valve (16) at a point upstream of the turbine expander.

2. A system as claimed in Claim 1 characterised in that there are no means for inducing the flow of anti-icing gas other than the pressure differential existing across the control valve (16).

3. A system as claimed in Claim 2 in operation with the volume of the flow of anti-icing gas to said region (68) being controlled by the magnitude of the pressure differential across the control valve (16).

4. A system as claimed in any one of the preceding claims characterised by a heat exchanger (20) for cooling the gas in the flow path and located downstream of the control valve (16), the de-icing gas being returned to the flow path upstream of the heat exchanger (20).

5. A system as claimed in any one of the preceding claims characterised by a heat exchanger (20) for cooling the gas in the flow path and located downstream of the control valve (16)' the de-icing gas being returned to the flow path downstream of the heat exchanger (20).

6. An aircraft environmental control system which is arranged to condition a relatively warm airflow for subsequent delivery to a space within the aircraft, comprising a duct (12, 18, 28, 32, 38, 42, 46) for the airflow, a control valve (16) located in the duct for varying the airflow therethrough, a heat sink (20) in the duct and located downstream of the control valve (16) for removing heat from the airflow in the duct, a rotary turbine expander (50) in the duct and located downstream of the control valve and serving to expand and cool the airflow, an outlet duct (14) extending from the turbine expander to the space in the aircraft, characterised by an anti-icing passage (66) extending from the duct (12) at a point upstream of the control valve (16) to an anti-icing chamber (68) located adjacent a region where icing is liable to occur, and a further passage (70) extending from said chamber (68) to a point of the duct intermediate the control valve (16) and the turbine expander (50).

7. A system as claimed in Claim 6 characterised in that the anti-icing chamber comprises an annular chamber (68) located around, and serving to warm, air passing through the turbine expander (50).

8. A system as claimed in any preceding claim including means (74) for adjusting the valve (16) to change the rate of passage of airflow.

**Patentansprüche**

1. System zum Konditionieren eines Arbeitsgases in einem Durchflußpfad, mit einem Steuerventil (16) zum Verändern des Gasdurchflusses im Durchflußpfad, einer Turbinenexpansionsvorrichtung (50) zum Expandieren und Kühlen des Gases, die im Durchflußpfad stromabwärts in bezug auf das Steuerventil (16) angeordnet ist, und mit einer Anzapfleitung (66, 70), die einen Strom aus Enteisungsgas aus einem Teil des Durchflußpfades stromaufwärts in bezug auf das Steuerventil (16) zurück in den Durchflußpfad stromabwärts in bezug auf das Steuerventil (16) richtet, dadurch gekennzeichnet, daß die Anzapfleitung in eine Enteisungskammer (68), die in Wärmeaustauschbeziehung mit, jedoch getrennt von einer Stelle des Durchflußpfades für das Arbeitsgas in der Turbinenexpansionsvorrichtung steht, welche einer Vereisungsgefahr ausgesetzt ist, und dann zurück in den Durchflußpfad stromabwärts in bezug auf das Steuerventil (16) an einer Stelle stromaufwärts in bezug auf die Turbinenexpansionsvorrichtung geführt ist.

2. System nach Anspruch 1, dadurch gekennzeichnet, daß keine Vorrichtungen zum Induzieren des Durchflusses von Enteisungsgas mit Ausnahme des Druckunterschiedes, der an dem Steuerventil (16) herrscht, vorgesehen sind.

3. System nach Anspruch 2, bei dem das Durchflußvolumen des Enteisungsgases in den Bereich (68) durch die Höhe des Druckunterschiedes an dem Steuerventil (16) gesteuert wird.

4. System nach einem der vorausgehenden Ansprüche, gekennzeichnet durch einen Wärmetauscher (20), der das Gas im Durchflußpfad kühlt und der stromabwärts in bezug auf das Steuerventil (16) angeordnet ist, wobei das Enteisungsgas in den Durchflußpfad stromaufwärts in bezug auf den Wärmetauscher (20) zurückgeführt wird.

5. System nach einem der vorausgehenden Ansprüche, gekennzeichnet durch einen Wärmetauscher (20), der das Gas im Durchflußpfad kühlt und der stromabwärts in bezug auf das Steuerventil (16) angeordnet ist, wobei das Enteisungsgas in den Durchflußpfad stromabwärts in bezug auf den Wärmetauscher (20) zurückgeführt wird.

6. Flugzeug-Klimaregelungssystem, das so ausgelegt ist, daß es einen relativ warmen Luftstrom konditioniert und anschließend in einen Raum innerhalb des Flugzeuges abgibt, mit einer Leitung (12, 18, 28, 32, 38, 42, 46) für den Luftstrom, einem Steuerventil (16), das in der Leitung zur Änderung des durchfließenden Luftstromes angeordnet ist, einer Wärmesenke (20) in der Leitung, die stromabwärts in bezug auf das Steuerventil (16) angeordnet ist, um dem Luftstrom in der Leitung Wärme zu entziehen, einer drehbaren Turbinenexpansionsvorrichtung (50) in der Leitung, die stromabwärts in bezug auf das Steuerventil angeordnet ist und zum Expandieren und Kühlen des Luftstromes dient, und mit einer Auslaßleitung (14), die sich von der Turbinenexpansionsvorrichtung in den erwähnten Raum im Flugzeug erstreckt, gekennzeichnet durch einen Enteisungskanal (66), der sich von der Leitung (12) an einer Stelle stromaufwärts in bezug auf das Steuerventil (16) in eine Enteisungskammer (68) erstreckt, die in der Nähe eines Bereiches angeordnet ist, in welchem eine Eisbildung auftreten kann, und einen weiteren Kanal (70), der sich von der Kammer (68) zu einer Stelle der Leitung zwischen dem Steuerventil (16) und der Turbinenexpansionsvorrichtung (50) erstreckt.

7. System nach Anspruch 6, dadurch gekennzeichnet, daß die Enteisungskammer eine um die Kammer herum angeordnete ringförmige Kammer (68) aufweist und die zum Erwärmen der durch die Turbinenexpansionsvorrichtung (50) strömenden Luft dient.

8. System nach einem der vorausgehenden Ansprüche, mit einer Vorrichtung (74) zur Einstellung des Ventiles (16), um die Geschwindigkeit des Durchganges des Luftstromes zu verändern.

**Revendications**

1. Système de conditionnement d'un gaz de travail sur un trajet d'écoulement, comprenant une vanne de commande (16) pour modifier l'écoulement de gaz sur le trajet d'écoulement, un détendeur à turbine (50) pour l'expansion et le refroidissement du gaz situé sur le trajet d'écoulement en aval de la vanne de commande (16), et une ligne de soutirage (66, 70) pour détourner un écoulement de gaz antigivrant d'une partie du trajet d'écoulement en amont de la vanne de commande (16) vers le trajet d'écoulement en aval de la vanne de commande (16), caractérisé en ce que la ligne de soutirage mène à une chambre antigivrante (68) qui est en position d'échange de chaleur avec un endroit du trajet de gaz de travail dans le détendeur à turbine sujet au givrage tout en en étant séparée, puis ramène au trajet d'écoulement en aval de la vanne de commande (16) à un point en amont du détendeur à turbine.

2. Système selon la revendication 1, caractérisé en ce qu'il n'y a pas d'autres moyens pour introduire l'écoulement de gaz antigivrant que le différentiel de pression existant à travers la vanne de commande (16).

3. Système selon la revendication 2, dans lequel, en fonctionnement, le volume de l'écoulement de gaz antigivrant vers ladite région (68) est commandé par l'amplitude du différentiel de pression à travers la vanne de commande (16).

4. Système selon l'une quelconque des revendications précédentes, caractérisé par un échangeur de chaleur (20) pour refroidir le gaz dans le trajet d'écoulement situé en aval de la vanne de commande (16), le gaz de dégivrage étant retourné dans le trajet d'écoulement en amont de l'échangeur de chaleur (20).

5. Système selon l'une quelconque des revendications précédentes, caractérisé par un échangeur de chaleur (20) pour refroidir le gaz dans le trajet d'écoulement situé en aval de la vanne de commande (16), le gaz de dégivrage étant retourné dans le trajet d'écoulement en aval de l'échangeur de chaleur (20).

6. Système de régulation climatique d'aéronef, agencé pour conditionner un écoulement d'air relativement chaud en vue de le distribuer ensuite dans un volume intérieur de l'aéronef, comprenant une conduite (12, 18, 28, 32, 38, 42, 46) pour l'écoulement d'air, une vanne de commande (16) située sur la conduite pour y modifier l'écoulement d'air, un puits thermique (20) dans la conduite en aval de la vanne de commande (16) pour soutirer de la chaleur à l'écoulement d'air dans la conduite, un détendeur à turbine tournante (50) dans la conduite en aval de la vanne de commande servant à l'expansion et au refroidissement de l'écoulement d'air, une tubulure de sortie (14) menant du détendeur à turbine au volume intérieur de l'aéronef, caractérisé par un passage antigivrant (66) allant d'un point de la conduite (12) en amont de la vanne de commande (16) à une chambre antigivrante (68) disposée adjacente à une région sujette au givre, et par un autre passage (70) allant de ladite chambre (68) à un point de la conduite entre la vanne de commande (16) et le détendeur à turbine (50).

7. Système selon la revendication 7, caractérisé en ce que la chambre antigivrante comprend une chambre annulaire (68) située autour de l'air passant à travers le détendeur à turbine (50) et servant à le réchauffer.

8. Système selon l'une quelconque des revendications précédentes, comprenant des moyens (74) de réglage de la vanne (16) pour modifier le débit de l'écoulement d'air.

FIG. I

EP 0 184 443 B1

FIG. 2

FIG. 3

FIG. 4